Europäisches Patentamt

European Patent Office

Office européen des brevets

(19)

(11) Publication number: **0 039 246**

**B1**

(12)

# EUROPEAN PATENT SPECIFICATION

(45) Date of publication of patent specification: 20.02.85

(51) Int. Cl.⁴: **G 03 B 7/095**

(21) Application number: **81301897.5**

(22) Date of filing: **29.04.81**

(54) Aperture control mechanism.

(30) Priority: **30.04.80 JP 57319/80**

(43) Date of publication of application:
**04.11.81 Bulletin 81/44**

(45) Publication of the grant of the patent:
**20.02.85 Bulletin 85/08**

(84) Designated Contracting States:
**DE FR GB**

(56) References cited:
**FR-A-1 409 349**
**FR-A-1 574 298**
**GB-A-1 476 144**

(73) Proprietor: **KONISHIROKU PHOTO INDUSTRY CO. LTD.**
**No. 26-2, Nishishinjuku 1-chome Shinjuku-ku Tokyo 160 (JP)**

(72) Inventor: **Hiraike, Fumiaki**
**1401 Naganuma-cho**
**Hachiohji-shi Tokyo (JP)**

(74) Representative: **Senior, Alan Murray et al**
**J.A. KEMP & CO 14 South Square Gray's Inn London WC1R 5EU (GB)**

EP 0 039 246 B1

## Description

The present invention relates to an apparatus for controlling an aperture, generally in a camera, wherein the aperture stop position is pulse controlled.

Generally, small-sized cameras have exposure control systems such as a programmed system wherein the shutter speed and aperture value are determined and the exposure is controlled according to film speed (e.g., ASA) of the photofilm and a photometric luminance measurement of the subject. Another system is a shutter-speed priority aperture system wherein the aperture value is determined and controlled by film speed (e.g., ASA), the luminance measurement and also a pre-set shutter speed. In another system the aperture value is manually determined and controlled, taking priority over the shutter speed. Usually the methods for controlling the aperture blades employ an aperture stop-down detector connected to an aperture control lever which moves the aperture blades. A counted value obtained by an aperture stop-down detector in the form of a pulse generator and a counter, or a resistance value obtained by the use of an aperture stop-down detector in the form of a resistor, is compared with a preset number of counts or preset value of resistance. The aperture control lever is stopped by a stopper mechanism at a position where the values compared are equivalent to each other. In these methods there is a time lag between detection of the aperture stop-down value and stopping of the aperture control lever. This precludes high aperture accuracy, and it is necessary to use lower aperture closing speeds in order to secure accurate aperture control.

Other methods for controlling aperture blade operation are, for example, a feed-back control method wherein a DC motor is used and a method using a pulse motor or equivalent means. In the former case, the control circuits and mechanism are complicated. In the latter case, the mechanism becomes simpler and more accurate, but the number of pulses per unit time to which the motor can respond is limited, so that the speed of aperture control is limited.

The present invention relates to an improvement in the technique of aperture control using a pulse motor or equivalent means. Therefore, a discussion will first be given of aperture control, wherein a pulse motor is used.

Present day pulse motors have a self-electromotive frequency of typically up to about 1,000 pps (pulses per second). Thus, for example, if F1 is the initial aperture and an aperture control to F22+0.5 EV is to be achieved using 0.1 EV as a unit, the nine aperture steps between F1 and F22 (i.e. F1.4, 2, 2.8, 4, 5.6, 8, 11, 16 and 22) require 9 EV involving 90 pulses, and 0.5 EV would involve 5 pulses, making a total pulse number of 95. If in this case an aperture control of F22+0.5 EV, is to be attempted within the time of 50 ms (0.05 sec.), a frequency of $95 \div 0.05 = 1,900$ pps would be necessary. It follows that this is not feasible with normal pulse motors so that as a corollary, normal pulse motors cannot control aperture operation using 0.1 EV as a unit.

The present invention is based upon the fact that normal pulse motors have a self-electromotive frequency of the order of 1,000 pps independent of the lead angle per pulse, and has the aim of performing a rapid and highly efficient aperture control.

GB—A—1 476 144 suggests the use of a stepping motor to adjust the position of shutter blades. GB—A—1 222 416 suggest a stepping motor arrangement employing two motors which drive an output in respective modes, the stator of one motor being geared to the rotor of the other motor.

According to the present invention, there is provided an aperture control mechanism for an aperture defined by a set of movable blades including means to determine the required movement of the blades from a starting position to a stopping position in terms of a number of unit pulses and including a pulse motor, characterised by means to split said number of unit pulses into at least two sets, and in that the pulse motor is a single pulse motor having alternative lead angles per pulse for driving said blades so that said blades are operated in at least two modes, in one of which sets of unit pulse numbers determine incremental blade movement and in another of which single pulses or smaller sets of unit pulse numbers, determine incremental blade movement.

The present invention employs a single pulse motor having alternative lead angles per pulse. In what follows the invention is described in such terms that the alternative operations of the motor, which has alternative lead angles per pulse, are represented by the operations of respective different motors A and B. The pulse motor A has an angle of lead (angle of revolution) per pulse of $\alpha°$ and the pulse motor B has an angle of lead per pulse of $n\alpha°$ (n being a positive integer). Now, the mechanism of the pulse motor A is set so that the angle of lead $\alpha°$ per pulse corresponds to 0.1 EV. As mentioned above, in previous aperture control methods of this type for an aperture control of F22+0.5 EV performed using such a pulse motor A alone, 95 pulses are needed to give aperture stop-down at the position corresponding to F22+0.5 EV involving $95\alpha°$ revolution, but the time required would be 95 ms using motor A of self-electromotive frequency of 1,000 pps. With the invention, however, when the number of unit-pulses in a set is 10, (i.e. n=10) the aforesaid 95 unit-pulses are split into and counted in two modes. There are 9 sets of 10 unit-pulses plus 5 remaining and additional unit-pulses. Thus 5 unit-pulses are input to the pulse motor A and 9 pulses, i.e. equivalent of 9 sets of 10 unit-pulses, are input to the pulse motor B.

Accordingly, the equation

$$5 \times \alpha° + 9 \times (10\alpha°) = 95\alpha°$$

applies and the apertures is stopped down to the position corresponding to F22+0.5 EV involving $95\alpha°$ revolution. The time required for performing the aperture control would vary with the operational conditions of the pulse motors, A and B, but normally the aperture is stopped down in the position within 14 ms. In other words, when the pulses are split into and counted in two modes, high accuracy of aperture stop-down is achieved with high speed. The two modes can be performed simultaneously, or successively. For instance pulse motor B can be operated first by applying the 9 sets of the unit pulses and thereafter the 5 unit of pulses would be applied to the pulse motor A. With this arrangement, the aperture can first be stopped down rapidly for a major part of blade movement, and the blades then move more slowly to the final position so that when they stop there will be almost no rebound. Although the self-electromotive frequency of normal pulse motor is of the order of 1,000 pps, when the pulses are split into two modes and two motors are used, it is still possible to perform a high speed aperture control even using motors of lower self-electromotive frequency. It is also possible to use, for instance, a rotary solenoid, having a much lower self-electromotive frequency than modern pulse motors.

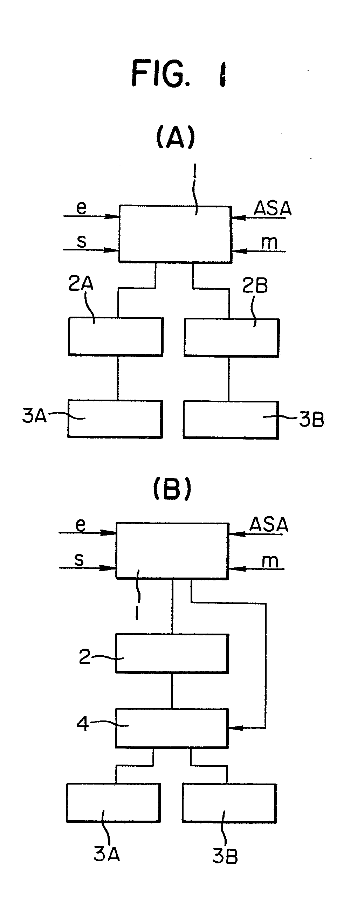

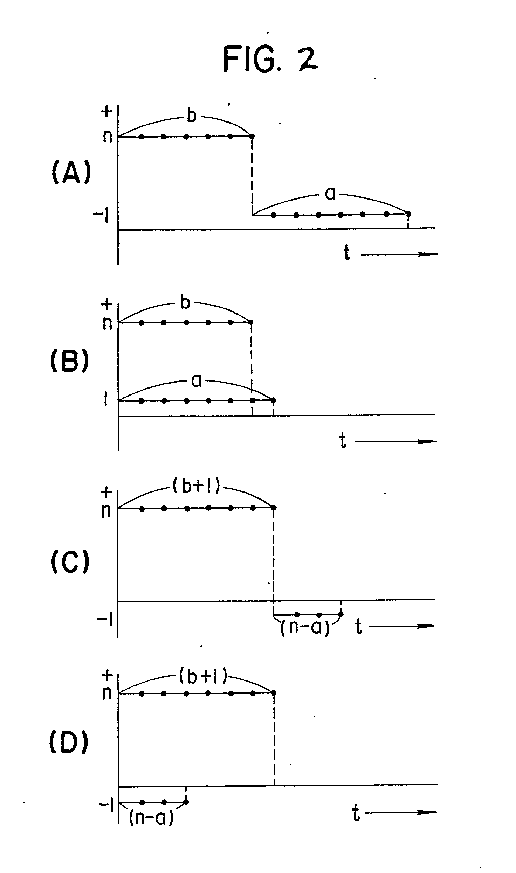

Figs. 1(A) and (B) are block diagrams illustrating the present invention and Figs. 2(A) to (D) are graphs showing the operation of pulse motors used in a time series.

Fig. 1(A) and Fig. 1(B) are block diagrams showing aperture control methods which can be performed with apparatus of the invention. Fig. 1(A) illustrates schematically that the most suitable aperture value (e.g., F8+0.7 EV) is determined on the basis of input information such as film speed (e.g., ASA), photometric value e, shutter speed s or a manual aperture setting m in a computer 1. The thus determined aperture value is converted into the corresponding unit pulse number (67 pulses in this example) so that one pulse can be generated by every 0.1 EV as described above. These pulses are supplied in respective modes to the pulse motors 3A and 3B, that is to say 7 unit pulses "a" to motor 3A in this example and pulses "b" being 6 sets, each representing 10 unit pulses to motor 3B. The generated pulses are supplied to driving sections 2A and 2B respectively and power-amplified. The pulse motor 3A leads by an angle of $\alpha°$ for each of its 7 pulses and the pulse motor 3B leads by an angle $n\alpha°$ (n herein being 10) for each of the 6 sets of pulses. This gives the total desired angle of $67\alpha°$, and the desired aperture value.

Fig. 1(B) is a block diagram of other aperture controlling arrangement wherein two ways of operating, that is, in series or in parallel in time, are available.

In the case of series control, the number of pulses "b" (6 in the previous example) which are supplied to the pulse motor 3B from the computer 1 are first generated. These pulses enter the pulse motor driving part 2 and are amplified and switched so that they enter the pulse motor 3B with the aid of an A/B switching part 4. After operation of pulse motor 3B the number of unit-pulses "a" (7 in the example) to be supplied to the pulse motor 3A are generated and enter the pulse motor driving part 2 and are amplified and with the aid of A/B switching part 4, the amplified pulses enter the pulse motor 3A and energise it so leading to the best stop value. In the case of a parallel time control, similarly the smaller number of pulses (6 pulses in the example) out of "a" or "b" can be first generated by computer 1; the pulses are amplified by the pulse motor driving part 2 and are supplied to both pulse motors 3A and 3B through the A/B switching part 4. Thus both pulse motors 3A and 3B are driving according to these pulses. Next, the difference between the pulse number "a" and the pulse number "b" (a—b=1 in the example) is generated in the computer 1 and the difference is supplied to the pulse motor 3A through the pulse motor driving part 2 with the aid of the A/B switching part 4. The pulse motor 3A advances according to this one unit pulse. The description assumes that both pulse motors operate in the same direction. If the motors operate in opposite directions, or if for instance motor 3A can operate in both directions, it is not necessary to start with the smaller number of "a" and "b" as described above.

Fig. 2 shows an operational sequence of the pulse motors A and B using the various techniques. In Fig. 2(A), the pulse motor B is rotated by the "b" pulses and immediately thereafter the pulse motor A is rotated by the "a" pulses in the same direction. In Fig. 2(B), the pulse motors A and B start to rotate in the same direction at the same time, and rotate by the numbers of "a" and "b" pulses respectively. In Fig. 2(C), the pulse motor B is rotated according to the number (b+1) pulses in one direction and then the pulse motor A is rotated according to (n—a) unit pulses in the opposite direction. In Fig. 2(D) the pulse motors A and B start to rotate at the same time in opposite directions according to the amounts of (n—a) and (b+1) respectively. It is most effective for the computer in Fig. 1 to have alternative facilities for procedure and a program that makes it operate according to Fig. 2(A) or (B) in the case of

$$< \frac{n}{2}$$

and makes it operate according to Fig. 2(C) or (D) in the case of a

$$> \frac{n}{2}.$$

In all cases described above, ten pulses are taken in each set i.e. n is equal to 10 but of course the invention is not limited to this situation. Further, although the use of only two pulse motors A and B has been described, in some cases such as where higher speed or greater range is desired it is possible to employ three modes and three pulse motors. In embodiments of the invention as above described there can be a pulse motor having for instance two inputs and which rotates by $(P \times \alpha)°$ when receiving P pulses at one input and by $(g \times n\alpha)°$ in the same direction when receiving g pulses at the other input.

Also, in the description above reference has been made only to the case of stop down from maximum aperture F1. In the single lens reflex camera, stopping down from maximum aperture is convenient from the view point of the brightness of the finder. However, the present invention is not limited to this situation and the case of operating from the minimum aperture towards the maximum aperture is included in its scope.

## Claims

1. An aperture control mechanism for an aperture defined by a set of movable blades including means to determine the required movement of the blades from a starting position to a stopping position in terms of a number of unit pulses and including a pulse motor, characterised by means (1) to split said number of unit pulses into at least two sets and in that the pulse motor is a single pulse motor (3A, 3B) having alternative lead angles per pulse for driving said blades, so that said blades are operated in at least two modes, in one of which sets of unit pulse numbers determine incremental blade movement and in another of which single unit pulses, or smaller sets of unit pulse numbers, determine incremental blade movement.

2. A mechanism according to claim 1 characterised in that the motor is arranged to effect the modes simultaneously.

3. A mechanism according to claim 1 characterised in that the motor is arranged to effect the modes in succession with said another mode after said one mode.

4. A mechanism according to claim 1, 2 or 3 characterised in that the blades are moved in the same direction in the modes.

5. A mechanism according to claim 1, 2 or 3 characterised in that the blades are moved in opposite directions in the modes.

## Patentansprüche

1. Blendeneinstellvorrichtung für eine von einem Satz von bewegbaren Flügeln bestimmte Blende mit einer Einrichtung zum Festsetzten der erforderlichen Bewegung der Flügel von einer Ausgangsstellung zu einer Anhaltestellung in Form einer Anzahl von Einheitsimpulsen und mit einem Impulsmotor, dadurch gekennzeichnet, daß eine Einrichtung (1) die Anzahl der Einheitsimpulse in wenigstens zwei Sätze trennt und daß der Impulsmotor ein einzelner Impulsmotor (3A, 3B) ist, der zum Antrieb der Flügel alternative Voreilwinkel pro Impuls hat, so daß die Flügel in wenigstens zweit Betriebsarten betätigt werden, in deren einer Sätze von Einheitsimpulsanzahlen eine inkrementelle Flügelbewegung und in deren anderer einzelne Einheitsimpulse oder kleinere Sätze von Einheitsimpulsenzahlen eine inkrementelle Flügelbewegung bestimmen.

2. Vorrichtung nach Anspruch 1, dadurch gekennzeichnet, daß der Motor gleichzeitigen Durchführung der Betriebsarten eingerichtet ist.

3. Vorrichtung nach Anspruch 1, dadurch gekennzeichnet, daß der Motor zur aufeinanderfolgenden Durchfürhrung der Betriebsarten mit der anderen Betriebsart nach der einen Betriebsart eingerichtet ist.

4. Vorrichtung nach Anspruch 1, 2 oder 3, dadurch gekennzeichnet, daß die Flügel in den Betriebsarten in derselben Richtung bewegt werden.

5. Vorrichtung nach Anspruch 1, 2 oder 3, dadurch gekennzeichnet, daß die Flügel in den Betriebsarten in entgegengesetzten Richtungen bewegt werden.

## Revendications

1. Dispositif de commande d'ouverture pour une ouverture définie par un ensemble de lames déplaçables, comprenant des moyens pour déterminer le mouvement requis des lames depuis une position de départ jusqu'à une position d'arrêt en fonction d'un nombre d'impulsions unitaires, et comprenant un moteur à impulsions, caractérisé par le fait qu'il comprend des moyens (1) pour diviser ledit nombre d'impulsions unitaires en au moins deux ensembles, et que le moteur à impulsions est un moteur à impulsion unique (3A, 3B) possédant un choix d'avance par impulsions pour entraîner lesdites lames de sorte que lesdites lames sont actionnées suivant au moins deux modes dans l'un desquels des ensembles de nombres d'impulsions unitaires déterminent un déplacement incrémentiel des lames et dans l'autre desquels des impulsions unitaires individuelles ou de plus petits ensembles de nombre d'impulsions unitaires déterminent le mouvement incrémentiel des lames.

2. Dispositif selon la revendication 1, caractérisé par le fait que le moteur est agencé pour fonctionner simultanément dans le deux modes.

3. Dispositif selon la revendication 1, caractérisé par le fait que le moteur est agencé pour fonctionner successivement dans l'un puis dans l'autre mode.

4. Dispositif selon l'une des revendications 1 à 3, caractérisé par le fait que les lames sont déplacées dans la même direction dans les différents modes.

5. Dispositif selon l'une des revendications 1 à 3, caractérisé par le fait que les lames sont déplacées dans des directions opposées dans les différents modes.

# FIG. 1

## (A)

## (B)

# FIG. 2

(A)

(B)

(C)

(D)